# EUROPÄISCHE PATENTSCHRIFT

(11) **EP 2 386 406 B1**
(45) Veröffentlichungstag und Bekanntmachung des Hinweises auf die Patenterteilung: **06.03.2013**
(21) Anmeldenummer: 11158007.2
(22) Anmeldetag: 14.03.2011
(51) Int. Cl.: B29D 30/24, B29D 30/26

(54) **Verfahren zum Herstellen eines Reifenrohlings**
Method for producing a tyre blank
Procédé destiné à la fabrication d'une ébauche de pneu

(30) Priorität: 12.05.2010 DE 102010016912
(43) Veröffentlichungstag der Anmeldung: 16.11.2011
(73) Patentinhaber: Continental Reifen Deutschland GmbH, 30165 Hannover (DE)
(72) Erfinder: Elsen, Patrick, 5312 Contern (LU); Thomforde, Claudia, 38542 Leiferde (DE); Kneussel, Ewald, 30890 Barsinghausen (DE); Komischke, Ralf, 31275 Lehrte (DE)
(74) Vertreter: Finger, Karsten

(56) Entgegenhaltungen:
- EP-A2- 0 479 057
- EP-A2- 0 997 263
- WO-A1-2006/003057

## Beschreibung

Die Erfindung betrifft ein Verfahren zum Herstellen eines Reifenrohlings.

Es ist üblich, die Reifenrohlinge von PKW-Radialreifen in einem zweistufigen Verfahren aufzubauen. Dabei wird vorerst auf der ersten Stufe einer Reifenaufbaumaschine eine Reifenkarkasse aus der Innenschicht, der Karkasseinlage, den Kempaketen und den Seitenwandteilen aufgebaut. Die fertiggestellte Reifenkarkasse wird der eingefahrenen Karkasstrommel entnommen und mittels einer Transfereinrichtung zur zweiten Stufe transportiert. Auf dieser Maschine wird die Reifenkarkasse bombiert und mit dem Gürte1/Laufstreifenpaket verbunden. Es ist daher erforderlich, die Reifenkarkasse der ersten Stufe zu entnehmen, zur zweiten Stufe zu transportieren und hier wieder aufzunehmen. Diese Vorgänge sind zeitaufwändig und es besteht die Gefahr, dass durch den Transfer der Reifenkarkasse die Genauigkeit, mit der sie aufgebaut wurde, leidet.

Eine Vielzahl von Patentanmeldungen befasst sich mit einer Verbesserung des Aufbauverfahrens einer Reifenkarkasse. Zur Zeit werden Reifenrohlinge auf verschiedenen Reifenaufbaumaschinen hergestellt, die alle ihre Vor- und Nachteile haben. Im Prinzip bestehen Reifenaufbaumaschinen meistens aus drei Stationen. Eine Station produziert die Karkasse, eine Station produziert das Laufstreifen/Gürtelpaket und die dritte Station fügt diese beiden Bauteile zusammen indem sie die Karkasse in das Gürtelpaket hinein bombiert. Der große Nachteil ist der Transport der Karkasse von der Karkasswickelstation zur Bombierstation. Dieses geschieht bei einigen Maschinen manuel. Es gibt auch Reifenaufbaumaschinen die nur aus zwei Stationen bestehen. Bei diesen Maschinen wird wird die Karkasse in einer Station gewickelt und auch bombiert. Hierdurch verlängert sich die Zykluszeit um einen Rohling zu produzieren.

Die EP 0 997 263 A2, WO 2006/003057 und EP 0479057 A2 offenbaren herkömmliche Verfahren zur Herstellung von Fahrzeugreifen.

Der Erfindung lag die Aufgabe zugrunde, ein Verfahren bereitzustellen, bei dem der Transfer einer Reifenkarkasse bei einer Reifenaufbaumaschine automatisch und auf einfache Weise erfolgen kann.

Gelöst wird die Aufgabe durch ein Verfahren, mit folgenden Schritten:
a) Fertigstellen einer Reifenkarkasse auf einer Karkasstrommel, wobei die Reifenwülste mit den Reifenkernen auf beiden Seiten der expandierten Karkasstrommel angelegt werden und die Reifenkarkasse im Radialquerschnitt eine im Wesentlichen u-förmige Kontur erhält,
b) Positionierung einer Karkass-Transfereinheit im Bereich der Reifenwülste,
c) Positionierung eines an der Karkass-Transfereinheit angeordneten horizontalen Wulstkern-Haltesegmentes in radialer Richtung unterhalb des Reifenwulstes,
d) Posititionierung eines an der Karkass-Transfereinheit angeordneten vertikalen Wulstkern-Haltesegmentes in axialer Richtung seitlich vom Reifenwulst,
e) Einfahren der Trommelsegmente der Karkasstrommel,
f) Halten und Verfahren der Reifenkarkasse zu einer zweiten Reifenaufbautrommel,
g) Positionierung der Reifenkarkasse auf die Balgträger an der zweiten Reifenaufbautrommel, wobei auf diesen Balgträger bereits die Seitenwände für den Fahrzeugreifen anliegen und die Reifenwülste der Reifenkarkasse direkt auf den vorgegebenen Positionen der Seitenwand positioniert werden,
h) Zusammenführen der Reifenkarkasse mit dem Materialpaket aus Laufstreifen und Reifengürtel, wobei dieses Zusammenführen über einen Bombiervorgang erfolgt bei dem die Reifenkarkasse innenseitig gegen das Materialpaket aus Laufstreifen und Reifengürtel gedrückt wird,
i) Hochschlagen der Seitenwände mit den Balgträgem zur Fertigstellung der Reifenseitenwände,
g) Weiterverarbeitung des Reifenrohlings nach einem konventionellen Herstellungsverfahren.

Ein Vorteil der Erfindung ist insbesondere darin zu sehen, dass durch das erfindungsgemäße Verfahren ein sehr präziser Transport der Reifenkarkasse und ein entsprechend genauer Zusammenbau des Reifenrohlings gewährleistet wird. Die erfindungsgemäße Karkass-Transfereinheit umfasst spezielle Fixierungs- und Positionierungsvorrichtungen, mit denen die Reifenkarkasse nach dem Lagenumschlag präzise von der Karkasstrommel abgenommen werden kann. Anschließend wird die Reifenkarkasse mit der Karkass-Transfereinheit zu der zweiten Reifenaufbautrommel verfahren und an entsprechenden Positionen auf den Balgträgem positioniert. Gegenüber herkömmlichen Verfahren sind auf den Balgträgem der zweiten Reifenaufbautrommel bereits die Seitenwände für den Reifenrohling aufgelegt. Nach dem Bombiervorgang, bei dem die Reifenkarkasse in das feststehende Materialpaket aus Laufstreifen und Reifengürtel gedrückt wird, werden die Seitenwände mit den Bombierbälgen seitlich hochgeschlagen. Das automatisierte Abnehmen der Reifenkarkasse von der Karkasstrommel und das anschließende entsprechende Positionieren der Reifenkarkasse auf der zweiten Reifenaufbautrommel gewährleistet die Herstellung von Reifenrohlingen mit einer hohen Fertigungsqualität.

In einer vorteilhaften Weiterbildung der Erfindung ist vorgesehen, dass das vertikale Wulstkern-Haltesegment ein Lochring-Segment und ein Haltemittel zum Halten des Reifenwulstes umfasst, womit bei Schritt f) das Halten und Verfahren der Reifenkarkasse zu der zweiten Reifenaufbautrommel erfolgt.
Dadurch werden die Reifenwülste auf beiden Seiten mit einer hohen Präzision gegriffen.

In einer weiteren vorteilhaften Weiterbildung der Erfindung ist vorgesehen, dass das Haltemittel zum Halten des Reifenwulstes mindestens einen Vakuumsauger umfasst, wobei dieser Vakuumsauger bei Schritt d) durch das Lochring-Segment den Reifenwulst hält.
Entsprechende Vakuumsauger lassen sich auf einfache Weise am Haltemittel anordnen. Außerdem lassen sich die Reifenwülste mit den Vakuumsaugern mit einer relativ hohen Haltekraft greifen. Das dazwischen liegende Lochring-Segment bietet den Vorteil, dass die Vakuumsauger nach dem Absetzen der Reifenkarkasse wieder einfach von dem Reifenwulst abgelöst werden können.

In einer weiteren vorteilhaften Weiterbildung der Erfindung ist vorgesehen, dass das Haltemittel zum Halten des Reifenwulstes mindestens einen Magneten umfasst, wobei dieser Magnet bei Schritt d) durch das Lochring-Segment den Reifenwulst hält.
Die Reifenkerne bestehen im Allgemeinen aus einem Stahlkord, der magnetisch ist. Dadurch lassen sich mit den Magneten die Reifenwülste auf einfache Weise durch das Lochring-Segment fixieren.

In einer weiteren vorteilhaften Weiterbildung der Erfindung ist vorgesehen, dass das horizontale und vertikale Wulstkern-Haltesegment an einer Verfahreinheit angeordnet sind.
Mit der Verfahreinheit lassen sich beide Wulstkern-Haltesegmente in jeder Position am Reifenwulst anordnen.

In einer weiteren vorteilhaften Weiterbildung der Erfindung ist vorgesehen, dass das horizontale Wulstkern-Haltesegment in radialer Richtung ein- und ausfahrbar ist. Dadurch wird ein präzises Greifen und Loslassen der Reifenwülste ermöglicht.

In einer weiteren vorteilhaften Weiterbildung der Erfindung ist vorgesehen, dass die Verfahreinheit über einen vertikalen Pneumatikzylinder in radialer Richtung verfahren wird.
Mit den Pneumatikzylindern lässt sich die Verfahreinheit mit einer relativ hohen Geschwindigkeit bewegen.

In einer weiteren vorteilhaften Weiterbildung der Erfindung ist vorgesehen, dass das Haltemittel zum Halten des Reifenwulstes über einen horizontalen Pneumatikzylinder in axialer Richtung verfahren wird.
Auf diese Weise lassen sich die entsprechenden Bauteile relativ schnell hin und her bewegen.

In einer weiteren vorteilhaften Weiterbildung der Erfindung ist vorgesehen, dass die Verfahreinheit auf einem Schlitten angeordnet ist, wobei dieser Schlitten bei Schritt f) die Reifenkarkasse zur zweiten Reifenaufbautrommel verfährt.
Der Schlitten gewährleistet einen präzisen Transport zu der zweiten Reifenaufbautrommel.

In einer weiteren vorteilhaften Weiterbildung der Erfindung ist vorgesehen, dass auf jeder Reifenwulstseite mindestens 4 Verfahreinheiten angeordnet sind, die den Reifenwulst symmetrisch über seinen gesamten Umfang halten.
Dadurch wird der Reifenwulst an mindestens vier Stellen präzise gegriffen.

In einer weiteren vorteilhaften Weiterbildung der Erfindung ist vorgesehen, dass die Karkass-Transfereinheit einen Tragering zum Halten der Außenseite der Reifenkarkasse umfasst. Auf diese Weise wird die Reifenkarkasse beim Transport zur zweiten Aufbautrommel zusätzlich mit Hilfe der Trageringe stabilisiert.

In einer weiteren vorteilhaften Weiterbildung der Erfindung ist vorgesehen, dass der Trage-Ring einen im Durchmesser verstellbaren Ring mit Aufnahmepolstern aus einem Schaumstoff umfasst.
Mit den Aufnahmepolstern lässt sich die Außenseite der Reifenkarkasse greifen, ohne dass entsprechende Gummimaterial auf der Reifenkarkasse zu beschädigen.

In einer weiteren vorteilhaften Weiterbildung der Erfindung ist vorgesehen, dass der Trage-Ring die Reifenkarkasse mit einem im Aufnahmepolster erzeugten Vakuum hält. Dadurch lässt sich die Reifenkarkasse mit einer ausreichenden Haltekraft auf einfache Weise greifen.

In einer weiteren vorteilhaften Weiterbildung der Erfindung ist vorgesehen, dass der Trage-Ring die Reifenkarkasse mit Vakkumsaugern hält.
Bei diesem Ausführungsbeispiel sind in den Aufnahmepolstern entsprechende Löcher vorgesehen, durch die die Vakuumsauger die Reifenkarkasse halten.

Anhand eines Ausführungsbeispiels soll die Erfindung näher erläutert werden. Es zeigen:
Fig. 1: die Karkasstrommel mit der Reifenkarkasse
Fig. 2: die zweite Reifenaufbautrommel
Fig. 3: die Reifenkarkasse nach der Positionierung auf den Seitenwänden
Fig. 4: die Karkass-Transfereinheit an der Karkasstrommel
Fig. 5: die Reifenkarkasse mit dem Reifenwulst und den Wulstkern-Haltesegmenten
Fig. 6: die Aufnahmepolster zum Stabilisieren der Reifenkarkasse
Fig. 7: die Verfahreinheit mit den Wulstkern-Haltesegmenten.

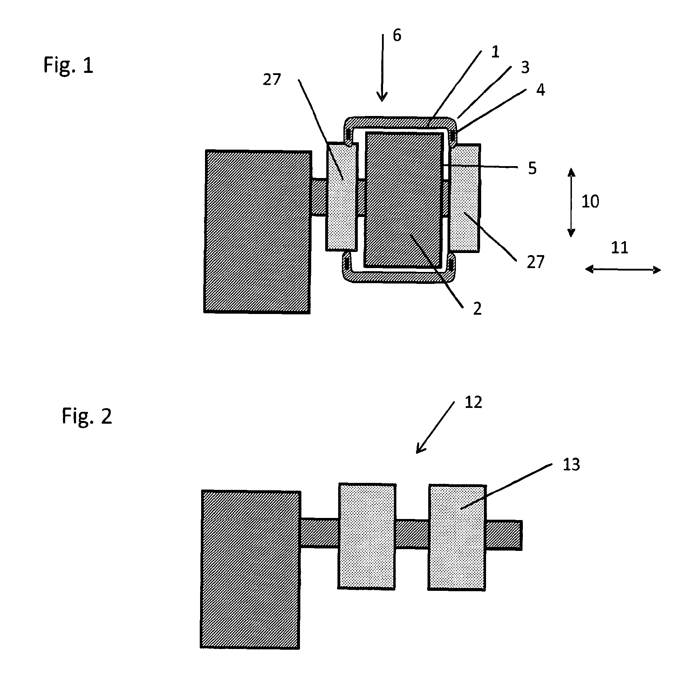

Die Figur 1 zeigt die Karkasstrommel 2, auf der die Reifenkarkasse 1 hergestellt wird. Die Karkasstrommel 2 besteht aus Trommelsegmenten, wodurch die Karkasstrommel insgesamt expandiert oder im Durchmesser verkleinert werden kann. Seitlich der Karkasstrommel 2 sind Balgträger 27 angeordnet, mit dem der Lagenumschlag des Einlagenendes um den Wulstkern 4 erfolgt. Zunächst wird die Einlage 1 auf der Karkasstrommel 2 positioniert. Anschließend expandiert die Karkasstrommel 5, so dass die Reifenkarkasse 1 eine U-förmige Kontur erhält. Nachdem die Wulstkerne 4 von beiden Seiten gesetzt worden sind, erfolgt der Lagenumschlag der Einlage mit den Balgträgem 27. Nach diesem Verfahrensschritt kommt die Karkass-Transfereinheit zum Einsatz, die in der Figur 1 nicht dargestellt ist. Die Karkass-Transfereinheit verfährt die Reifenkarkasse 1 zu der zweiten Reifenaufbautrommel, die in der Figur 2 dargestellt ist.

Die Figur 2 zeigt die zweite Reifenaufbautrommel mit den beiden Balgträgem 13. An dieser zweiten Reifenaufbautrommel erfolgt der Bombiervorgang, bei dem die Reifenkarkasse mit dem Materialpaket aus Laufstreifen und Reifengürtel zusammen geführt wird.

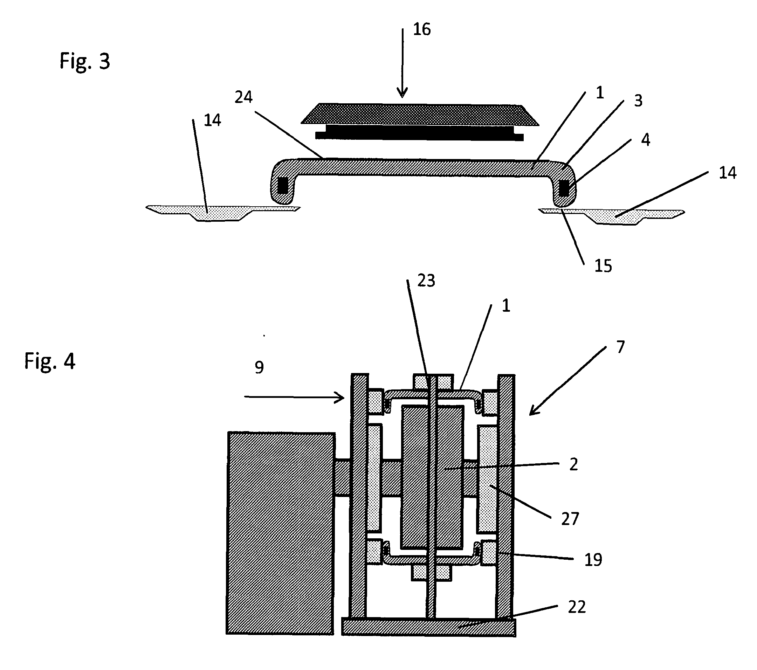

Die Figur 3 zeigt den Verfahrensschritt, bei dem die Reifenkarkasse 1 auf der nicht dargestellten zweiten Reifenaufbautrommel positioniert worden ist. Auf dieser zweiten Reifenaufbautrommel bzw. auf den entsprechenden Balgträgem sind bereits die beiden Seitenwände 14 aufgelegt. Die Reifenkarkasse 1 wird mit den Reifenwülsten 3 auf den vorgegebenen Positionen 15 auf den Seitenwänden 14 positioniert. Die genaue Positionierung ist daher wichtig, um Reifenrohlinge mit einer hohen Fertigungsqualität herstellen zu können. Über der Reifenkarkasse ist das Materialpaket 16 aus Laufstreifen und Reifengürtel angeordnet. Über einen entsprechenden Bombiervorgang wird die Außenseite 24 mit dem Materialpaket 16 zusammengeführt. Bei diesem Bombiervorgang wird die Reifenkarkasse entsprechend expandiert. Anschließend erfolgt der Lagenhochschlag der Seitenwände 14, um damit die Reifenseitenwände des Reifenrohlings zu vervollständigen.

Die Figur 4 zeigt den Verfahrensschritt, bei dem die Karkass-Transfereinheit 7 im Bereich der Reifenwülste der Reifenkarkasse 1 positioniert werden. Die Verfahreinheit 19 greift bei diesem Vorgang den Reifenwulst 3 mit den nicht dargestellten Wulstkernhaltesegmenten. Zusätzlich wird die Reifenkarkasse 1 mit den Aufnahmepolstern 23 an der Außenseite der Reifenkarkasse 1 gehalten. Anschließend fallen die Segmente der Karkasstrommel ein, wobei die Reifenkarkasse 1 in der dargestellten Position gehalten wird. Die Karkass-Transfereinheit 7, die auf einem Schlitten 22 angeordnet ist, wird anschließend zu der zweiten Reifenaufbautrommel verfahren. Die Verfahreinheiten 19 sind gegenüber dem Schlitten 22 in horizontaler und in vertikaler Richtung verfahrbar angeordnet.

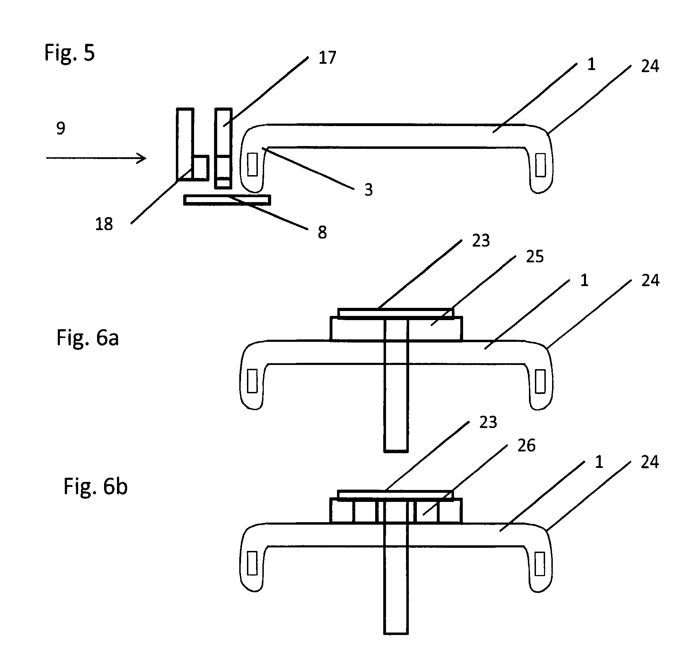

Die Figur 5 zeigt die Reifenkarkasse 1 mit dem Reifenwulst 3, dem horizontalen Wulstkern-Haltesegment 8 und dem vertikalen Wulstkern-Haltesegment 9. Das vertikale Wulstkern-Haltesegment 9 besteht aus dem Haltemittel 18 und dem Lochring-Segment 17. Das horizontale Wulstkern-Haltesegment 8 hält den Reifenwulst 3 an seiner Unterseite fest. Nachdem das Lochring-Segment 17 seitlich an den Reifenwulst 3 herangefahren wurde, greift das Haltemittel 18 den Reifenwulst 3 beispielsweise über Vakuumsauger.

Die Figuren 6a und 6b zeigen die Reifenkarkasse 1 mit den Aufnahmepolstern 25 und 26. Die Aufnahmepolster 25 sind an einem Tragering 23 angeordnet, der im Durchmesser verkleinerbar ist. Der Tragering 23 mit den Aufnahmepolstern 25 oder 26 dienen dazu, die Reifenkarkasse 1 beim Transport zu stabilisieren. Bei dem Aufnahmepolster 25 in Fig. 6a wird über ein entsprechend erzeugtes Vakuum die Außenseite 24 der Reifenkarkasse 1 entsprechend angesaugt und gehalten. Bei dem Aufnahmepolster 26 in Fig. 6b ist eine entsprechende Öffnung für Vakuumsauger vorgesehen, die ebenfalls die Außenseite 24 der Reifenkarkasse 1 fixieren.

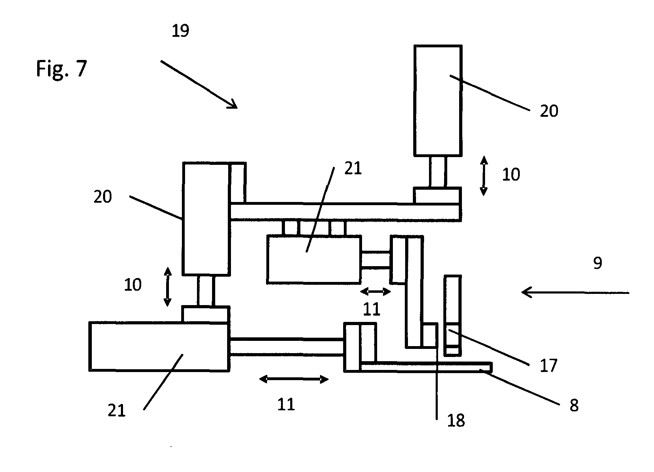

Die Figur 7 zeigt die Verfahreinheit 19 der Karkass-Transfereinheit. An der Verfahreinheit 19 sind ein horizontales Wulstkern-Haltesegment 8 und ein vertikales Wulstkern-Haltesegment 9 angeordnet. Das vertikale Wulstkern-Haltesegment 9 besteht aus dem Lochring-Segment 17 und dem Haltemittel 18, an dem entweder nicht dargestellte Vakuumsauger oder entsprechende Magnete angeordnet sind. Das horizontale Wulstkern-Haltesegment 8 kann in axialer Richtung 11 ein- und ausgefahren werden, wobei die Figur die eingefahrene Stellung zeigt. Über den vertikalen Pneumatikzylinder 20 wird die Verfahreinheit 19 in radialer Richtung 10 verfahren. Mit dem horizontalen Pneumatikzylinder 21 wird das Haltemittel 18 in axialer Richtung 11 hin und her verfahren. Über diese Bewegung werden Vakuumsauger, die am Haltemittel 18 angeordnet sind, durch die Löcher im Lochring-Segment 17 eingefahren um den anliegenden, nicht dargestellten Reifenwulst zu greifen. Beim Zurückfahren des Haltemittels 18 werden die Vakuumsauger wieder von dem nicht dargestellten Reifenwulst gelöst, wobei das Lochring-Segment 17 den Reifenwulst weiterhin in seiner Position hält. Die Bewegung der Verfahreinheit 19 erfolgt folgendermaßen. Zunächst verfährt die gesamte Verfahreinheit 19 an den Reifenwulst. Bei diesem Vorgang ist das horizontale Wulst-Haltesegment 8 bereits ausgefahren. Anschließend wird die gesamte Verfahreinheit 19 nach oben gefahren und klemmt den Reifenwulst von unten ein. Danach wird das Haltemittel 18 gegen das Lochring-Segment 17 in axialer Richtung 11 gefahren, wodurch die Vakuumsauger am Reifenwulst anliegen und den Reifenwulst von der Seite halten. Im nächsten Schritt fährt die nicht dargestellte Karkasstrommel zusammen und die von der Karkass-Transfereinheit gegriffene Reifenkarkasse wird zur zweiten Reifenaufbautrommel verfahren. Bei der Positionierung der Reifenkarkasse auf der zweiten Reifenaufbautrommel wird folgendermaßen verfahren. Das horizontale Wulstkern-Haltesegment 8 wird in axialer Richtung 11 zurückverfahren, sobald die Reifenkarkasse sich über den entsprechenden Balgträger der zweiten Reifenaufbautrommel befindet. Anschließend expandieren die Balgträger bzw. der Bombierkopf, die die Reifenwülste dabei entsprechend einklemmen. Im nächsten Schritt fährt das Haltemittel 18 mit den Vakuumsaugern zurück, wobei der Reifenwulst an der entsprechenden Position durch das Lochring-Segment 17 gehalten wird. Danach wird das Lochring-Segment 17 zur Seite verfahren und die gesamte Verfahreinheit 19 wieder zur Karkasstrommel verfahren. Anschließend erfolgt der Bombiervorgang der Reifenkarkasse, wie dieser in der Figur 3 beschrieben wurde.

### Bezugszeichenliste

### (ist Teil der Beschreibung)

- 1: Reifenkarkasse
- 2: Karkasstrommel
- 3: Reifenwulst
- 4: Reifenkerne bzw. Wulstkerne
- 5: Seite der Karkasstrommel
- 6: U-förmige Kontur der Reifenkarkasse
- 7: Karkass-Tranfereinheit
- 8: Horizontales Wulstkern-Haltesegment
- 9: Vertikales Wulstkern-Haltesegment
- 10: radiale Richtung
- 11: axiale Richtung
- 12: zweite Reifenaufbautrommel
- 13: Balgträger der zweiten Reifenaufbautrommel
- 14: Seitenwände
- 15: Vorgegebene Position an der Seitenwand
- 16: Materialpaket aus Laufstreifen und Reifengürtel
- 17: Lochring-Segment
- 18: Haltemittel
- 19: Verfahreinheit
- 20: Vertikaler Pneumatikzylinder
- 21: horizontaler Pneumatikzylinder
- 22: Schlitten
- 23: Tragering
- 24: Außenseite der Reifenkarkasse
- 25: Aufnahmepolster
- 26: Aufnahmepolster mit Öffnung für Vakuumsauger
- 27: Balgträger

## Patentansprüche

1. Verfahren zum Herstellen eines Reifenrohlings mit folgenden Schritten:
a) Fertigstellen einer Reifenkarkasse (1) auf einer Karkasstrommel (5), wobei die Reifenwülste (3) mit den Reifenkernen (4) auf beiden Seiten der expandierten Karkasstrommel (5) angelegt werden und die Reifenkarkasse (1) im Radialquerschnitt eine im Wesentlichen u-förmige Kontur erhält,
b) Positionierung einer Karkass-Transfereinheit (7) im Bereich der Reifenwülste (3),
c) Positionierung eines an der Karkass-Transfcreinheit (7) angeordneten horizontalen Wulstkern-Haltesegmentes (8) in radialer Richtung (19) unterhalb des Reifenwulstes (3),
d) Positionierung eines an der Karkass-Transfereinhcit (7) angeordnete vertikalen Wulstkern-Haltesegmentes (9) in axialer Richtung (11) seitlich vom Reifenwulst,
e) Einfahren der Trommelsegmente der Karkasstrommel (5),
f) Halten und Verfahren der Reifenkarkasse (1) zu einer zweiten Reifenaufbautrommel (12),
g) Positionierung der Reifenkarkasse (1) auf die Balgträger (13) an der zweiten Reifenaufbautrommel (12), wobei auf diesen Balgträgcr (13) bereits die Seitenwände (14) für den Fahrzeugreifen anliegen und die Reifenwülste (3) der Reifenkarkasse (1) direkt auf den vorgegebenen Positionen (15) der Seitenwand (14) positioniert werden,
h) Zusammenführen der Reifenkarkasse (1) mit dem Materialpaket aus Laufstreifen und Reifengürtel, wobei dieses Zusammenführen über einen Bombiervorgang erfolgt bei dem die Reifenkarkasse (1) innenseitig gegen das Materialpaket (16) aus Laufstreifen und Reifengürtel gedrückt wird,
i) Hochschlagen der Seitenwände (14) mit den Balgträgem (13) zur Fertigstellung der Reifenseitenwände,
g) Weiterverarbeitung des Reifenrohlings mit weiteren Schritten.

2. Verfahren nach Anspruch 1,
**dadurch gekennzeichnet, dass**
das vertikale Wulstkern-Haltesegment (8) ein Lochring-Segment (17) und ein Haltemittel (18) zum Halten des Reifenwulstes (3) umfasst, womit bei Schritt f) das Halten und Verfahren der Reifenkarkasse (1) zu der zweiten Reifenaufbautrommel (12) erfolgt.

3. Verfahren nach einem der vorhergehenden Ansprüche,
**dadurch gekennzeichnet, dass**
das Haltemittel (9) zum Halten des Reifenwulstes mindestens einen Vakuumsauger umfasst, wobei dieser Vakuumsauger bei Schritt d) durch das Lochring-Segment (17) den Reifenwulst (3) hält.

4. Verfahren nach einem der vorhergehenden Ansprüche,
**dadurch gekennzeichnet, dass**
das Haltemittel (9) zum Halten des Reifenwulstes (3) mindestens einen Magneten umfasst, wobei dieser Magnet bei Schritt d) durch das Lochring-Segment (17) den Reifenwulst (3) hält.

5. Verfahren nach einem der vorhergehenden Ansprüche,
**dadurch gekennzeichnet, dass**
das Haltemittel (9) zum Halten des Reifenwulstes (3) mindestens einen Gummiklebefläche umfasst, wobei diese Gummiklebefläche bei Schritt d) durch das Lochring-Segment (17) den Reifenwulst (3) hält.

6. Verfahren nach einem der vorhergehenden Ansprüche,
**dadurch gekennzeichnet, dass**
das horizontale und vertikale Wulstkern-Haltesegment (8, 9) an einer Verfahreinheit (19) angeordnet sind.

7. Verfahren nach einem der vorhergehenden Ansprüche,
**dadurch gekennzeichnet, dass**
das horizontale Wulstkern-Haltesegment (8) in radialer Richtung ein- und ausfahrbar ist.

8. Verfahren nach einem der vorhergehenden Ansprüche,
**dadurch gekennzeichnet, dass**
die Verfahreinheit (19) über einen vertikalen Pneumatikzylinder (20) in radialer Richtung (10) verfahren wird.

9. Verfahren nach einem der vorhergehenden Ansprüche,
dadurch gekennzeichet, dass
das Haltemittel (18) zum Halten des Reifenwulstes über einen horizontalen Pneumatikzylinder (21 in axialer Richtung (11) verfahren wird.

10. Verfahren nach einem der vorhergehenden Ansprüche,
**dadurch gekennzeichnet, dass**
die Verfahreinheit (19) auf einem Schlitten (22) angeordnet ist, wobei dieser Schlitten (22) bei Schritt f) die Reifenkarkasse (1) zur zweiten Reifcnaufbautrommel (12) verfährt.

11. Verfahren nach einem der vorhergehenden Ansprüche,
**dadurch gekennzeichnet, dass**
auf jeder Reifenwulstseite mindestens 3 Verfahreinheiten (19) angeordnet sind, die den Reifenwulst (3) symmetrisch über seinen gesamten Umfang halten.

12. Verfahren nach einem der vorhergehenden Ansprüche,
**dadurch gekennzeichnet, dass**
die Karkass-Transfereinheit (7) einen Tragering (23) zum Halten der Außenseite (24) der Reifenkarkasse umfasst.

13. Verfahren nach einem der vorhergehenden Ansprüche,
**dadurch gekennzeichnet, dass**
der Tragering einen im Durchmesser verstellbaren Ring (23) mit Aufnahmepolstern (25, 26) aus einem Schaumstoff umfasst.

14. Verfahren nach einem der vorhergehenden Ansprüche,
**dadurch gekennzeichnet, dass**
der Tragering (23) die Reifenkarkasse (1) mit einem im Aufnahmepolster (25) erzeugten Vakuum hält.

15. Verfahren nach einem der vorhergehenden Ansprüche,
**dadurch gekennzeichnet, dass**
der Tragering (23) die Reifenkarkasse (1) mit Vakkumsaugern hält.

## Claims

1. Method for producing a tyre blank comprising the following steps:
a) fabricating a tyre carcass (1) on a carcass drum (5), wherein the tyre beads (3) are placed with the tyre cores (4) on both sides of the expanded carcass drum (5) and the tyre carcass (1) obtains a substantially u-shaped contour in radial cross section,
b) positioning a carcass transfer unit (7) in the region of the tyre beads (3),
c) positioning a horizontal bead core holding segment (8), arranged on the carcass transfer unit (7), in the radial direction (19) below the tyre bead (3),
d) positioning a vertical bead core holding segment (9), arranged on the carcass transfer unit (7), in the axial direction (11) laterally from the tyre bead,
c) moving the drum segments of the carcass drum (5),
f) holding and moving the tyre carcass (1) to a second tyre building drum (12),
g) positioning the tyre carcass (1) on the bladder support (13) on the second tyre building drum (12), wherein the side walls (14) for the vehicle tyre already rest on this bladder support (13) and the tyre beads (3) of the tyre carcass (1) are directly positioned at the predetermined positions (15) of the side wall (14),
h) combining the tyre carcass (1) with the material assembly consisting of tread and tyre belt, wherein this combining process takes place by means of a cambering operation in which the tyre carcass (1) is pressed internally against the material assembly (16) consisting of tread and tyre belt,
i) turning up the side walls (14) with the bladder supports (13) to finish the tyre side walls,
j) further processing the tyre blank with further steps.

2. Method according to Claim 1, **characterized in that** the vertical bead core holding segment (8) comprises a perforated ring segment (17) and a holding means (18) for holding the tyre bead (3), whereby in step f) the tyre carcass (1) is held and moved to the second tyre building drum (12).

3. Method according to one of the preceding claims, **characterized in that** the holding means (9) for holding the tyre bead comprises at least one vacuum sucker, wherein this vacuum sucker holds the tyre bead (3) by means of the perforated ring segment (17) in step d).

4. Method according to one of the preceding claims, **characterized in that** the holding means (9) for holding the tyre bead (3) comprises at least one magnet, wherein this magnet holds the tyre bead (3) by means of the perforated ring segment (17) in step d).

5. Method according to one of the preceding claims, **characterized in that** the holding means (9) for holding the tyre bead (3) comprises at least one rubber adhesive surface, wherein this rubber adhesive surface holds the tyre bead (3) by means of the perforated ring segment (17) in step d).

6. Method according to one of the preceding claims, **characterized in that** the horizontal and vertical bead core holding segment (8, 9) are arranged on a movement unit (19).

7. Method according to one of the preceding claims, **characterized in that** the horizontal bead core holding segment (8) can be moved in and out in the radial direction.

8. Method according to one of the preceding claims, **characterized in that** the movement unit (19) is moved in the radial direction (10) via a vertical pneumatic cylinder (20).

9. Method according to one of the preceding claims, **characterized in that** the holding means (18) for holding the tyre bead is moved in the axial direction (11) via a horizontal pneumatic cylinder (21).

10. Method according to one of the preceding claims, **characterized in that** the movement unit (19) is arranged on a carriage (22), wherein in step f) this carriage (22) moves the tyre carcass (1) to the second tyre building drum (12).

11. Method according to one of the preceding claims, **characterized in that** there are arranged on each tyre bead side at least three movement units (19) which hold the tyre bead (3) symmetrically over its entire circumference.

12. Method according to one of the preceding claims, **characterized in that** the carcass transfer unit (7) comprises a support ring (23) for holding the outer side (24) of the tyre carcass.

13. Method according to one of the preceding claims, **characterized in that** the support ring comprises a ring (23) which is adjustable in diameter and which has receiving cushions (25, 26) made of a foam.

14. Method according to one of the preceding claims, **characterized in that** the support ring (23) holds the tyre carcass (1) with a vacuum generated in the receiving cushion (25).

15. Method according to one of the preceding claims, **characterized in that** the support ring (23) holds the tyre carcass (1) with vacuum suckers.

## Revendications

1. Procédé de fabrication d'une ébauche de bandage de roue, le procédé comportant les étapes suivantes :
a) préparation d'une carcasse (1) de bandage de roue sur un tambour (5) de carcasse, les bourrelets (3) de bandage de roue étant placés avec les âmes (4) de bandage de roue sur les deux côtés du tambour (5) de carcasse expansé et la carcasse (1) de bandage de roue présentant en coupe transversale radiale un contour essentiellement en forme de U,
b) placement d'une unité (7) de transfert de carcasse au niveau des bourrelets (3) de bandage de roue,
c) placement d'un segment horizontal (8) de maintien d'âme de bourrelet, disposé sur l'unité (7) de transfert de carcasse en dessous du bourrelet (3) de bandage de roue dans la direction radiale (19),
d) placement d'un segment vertical (9) de maintien d'âme de bourrelet, disposé sur l'unité (7) de transfert de carcasse latéralement par rapport au bourrelet de bandage de roue dans la direction axiale (11),
e) rétraction des segments du tambour (5) de carcasse,
f) maintien et déplacement de la carcasse (1) de bandage de roue vers un deuxième tambour (12) de montage de bandage de roue,
g) placement de la carcasse (1) de bandage de roue sur les supports (13) en soufflet du deuxième tambour (12) de montage de bandage de roue, les parois latérales (14) du bandage de roue de véhicule reposant déjà sur ses supports (13) en soufflet et les bourrelets (3) de la carcasse (1) du bandage de roue étant placés directement en les positions prédéterminées (15) de la paroi latérale (14),
h) assemblage de la carcasse (1) du bandage de roue avec le paquet de matériaux constitué de la bande de roulement et de la ceinture du bandage de roue, cet assemblage s'effectuant par l'intermédiaire d'une opération de bombage dans laquelle la carcasse (1) du bandage de roue est repoussée du côté intérieur contre le paquet (16) de matériaux constitué de la bande de roulement et de la ceinture du bandage de roue,
i) relèvement des parois latérales (14) avec les supports (13) en soufflet pour réaliser les parois latérales du bandage de roue et
g) poursuite du traitement de l'ébauche de bandage de roue avec les autres étapes.

2. Procédé selon la revendication 1, **caractérisé en ce que** le segment vertical (8) de maintien d'âme de bourrelet comporte un segment (17) en anneau perforé et un moyen de maintien (18) qui maintient le bourrelet (3) du bandage de roue et **en ce que** le maintien et le déplacement de la carcasse (1) du bandage de roue vers le deuxième tambour (12) de montage de bandage de roue a lieu à l'étape f).

3. Procédé selon l'une des revendications précédentes, **caractérisé en ce que** pour maintenir le bourrelet de bandage de roue, le moyen de maintien (9) comporte au moins un dispositif d'aspiration, ce dispositif d'aspiration maintenant le bourrelet (3) du bandage de roue par l'intermédiaire du segment (17) en anneau perforé lors de l'étape d).

4. Procédé selon l'une des revendications précédentes, **caractérisé en ce que** pour maintenir le bourrelet (3) de bandage de roue, le moyen de maintien (9) comporte au moins un aimant, cet aimant maintenant le bourrelet (3) du bandage de roue par l'intermédiaire du segment (17) en anneau perforé lors de l'étape d).

5. Procédé selon l'une des revendications précédentes, **caractérisé en ce que** pour maintenir le bourrelet (3) de bandage de roue, le moyen de maintien (9) comporte au moins une surface adhésive en caoutchouc, cette surface adhésive en caoutchouc retenant le bourrelet (3) du bandage de roue par l'intermédiaire du segment (17) en anneau perforé lors de l'étape d).

6. Procédé selon l'une des revendications précédentes, **caractérisé en ce que** le segment horizontal et le segment vertical (8, 9) de maintien d'âme de bourrelet sont disposés sur une unité de déplacement (19).

7. Procédé selon l'une des revendications précédentes, **caractérisé en ce que** le segment horizontal (8) de maintien d'âme de bourrelet peut être rétracté et déployé dans la direction radiale.

8. Procédé selon l'une des revendications précédentes, **caractérisé en ce que** l'unité de déplacement (19) est déplacée dans la direction radiale (10) par l'intermédiaire d'un vérin pneumatique vertical (20).

9. Procédé selon l'une des revendications précédentes, **caractérisé en ce que** pour maintenir le bourrelet de bandage de roue, le moyen de maintien (18) est déplacé dans la direction axiale (11) par l'intermédiaire d'un vérin pneumatique horizontal (21).

10. Procédé selon l'une des revendications précédentes, **caractérisé en ce que** l'unité de déplacement (19) est disposée sur un chariot (22), ce chariot (22) déplaçant la carcasse (1) du bandage de roue vers le deuxième tambour (12) de montage de bandage de roue lors de l'étape f).

11. Procédé selon l'une des revendications précédentes, **caractérisé en ce qu'**au moins trois unités de déplacement (19) qui maintiennent le bourrelet (3) du bandage de roue de manière symétrique sur toute sa périphérie sont disposées sur chaque côté du bourrelet de bandage de roue.

12. Procédé selon l'une des revendications précédentes, **caractérisé en ce que** l'unité (7) de transfert de carcasse comporte un anneau de support (23) qui maintient le côté extérieur (24) de la carcasse du bandage de roue.

13. Procédé selon l'une des revendications précédentes, **caractérisé en ce que** l'anneau de maintien comporte un anneau (23) de diamètre ajustable et doté de coussinets (25, 26) de reprise en matériau moussé.

14. Procédé selon l'une des revendications précédentes, **caractérisé en ce que** l'anneau de support (23) maintient la carcasse (1) du bandage de roue par une dépression formée dans le coussinet de reprise (25).

15. Procédé selon l'une des revendications précédentes, **caractérisé en ce que** l'anneau de maintien (23) maintien la carcasse (1) du bandage de roue à l'aide de dispositifs d'aspiration.
